# EUROPEAN PATENT SPECIFICATION

(11) **EP 3 744 059 B1**
(45) Date of publication and mention of the grant of the patent: **11.10.2023**
(21) Application number: 18833394.2
(22) Date of filing: 27.11.2018
(51) Int. Cl.: H04L 9/40, G06F 21/64

(54) **SYSTEM AND METHOD FOR AUTHENTICATING A MESSAGE PROVIDER**
VERFAHREN UND SYSTEM ZUR AUTHENTIFIZIERUNG EINES NACHRICHTENBEREITSTELLERS
SYSTÈME ET PROCÉDÉ D'AUTHENTIFICATION D'UN FOURNISSEUR DE MESSAGES

(30) Priority: 27.11.2017 EP 17203937
(43) Date of publication of application: 02.12.2020
(73) Proprietor: Rees-Andersen, Mark, 2800 Kongens Lyngby (DK)
(72) Inventor: Rees-Andersen, Mark, 2800 Kongens Lyngby (DK)
(74) Representative: Høiberg P/S
(86) International application number: PCT/EP2018/082662
(87) International publication number: WO 2019/102029

(56) References cited:
- US-A1- 2012 167 174
- US-B2- 8 607 361

## Description

The present disclosure relates to a computer implemented method for providing at least one authentic identification entry in a list of contacts of a communication application on a communication device. The present disclosure further relates to a mobile device configured for executing this method.

### Background of invention

Authentication of message providers is known in the field of spoofing. Most commonly, authentication is based on Domain-Based Message Authentication, Reporting & Conformance (DMARC), which involves a domain to publish DMARC records, set up SPF records, and set up DKIM records. Authentication and filtering typically takes place on an email-server, which is set up and configured to analyse the email before the email reaches the client.

However, as of today, the user of the client device is not able to clearly see that the message has been authenticated, at least not from an end-user point of view. Thus, there is a need for a method that provides the end-user with clear indication that the message has been authenticated.

US 8 607 361 B2, and US 2012/167174 A1 relate to providing an end-user with clear indication that a message has been authenticated, the first patent relating to an email trust service, and the second relating to trusted email indicators.

### Summary of invention

The present disclosure relates in a first aspect to a computer implemented method for providing at least one authentic identification entry in a list of contacts on a communication device, e.g. a list of contacts of a communication application. A communication device such as a mobile telecom device, e.g. a smartphone. The method comprising the steps of: requesting a list of authentic message providers from a remote server communicating with the communication device; receiving the list of authentic message providers from the remote server after said requesting; storing the list of authentic message providers such that it is coupled to the list of contacts; coupling at least one image to at least one of the authentic message providers on the list of authentic message providers; and providing at least one identification entry in the list of contacts, wherein the at least one identification entry is corresponding to the at least one of the authentic message providers on the list of authentic message providers, such that the at least one identification entry comprises at least one image, whereby the at least one identification entry is marked as at least one authentic identification entry identification.

The list of contacts of a communication application may be an integrated part of the communication application or a separate part. For example, the communication application may be an email client such as the default email applications of iOS and Android ("Mail" and "Email" apps, respectively), or third party email apps that integrate with the users' list of contacts on the device, such as (but not limited to) Outlook, Spark, and Unibox, or a message client for handling text messages, e.g. SMS. The list of contacts may be integrated therein or at least accessible therefrom. The list of contacts may be imported into the communication application, or exported to a separate list of contacts, for example not integrated in the communication application. The communication application is typically stored on the communication device, at least the short-cut to the communication application, and therefore in some embodiments, the communication device may be without a local storage, such that the communication application runs on a cloud based device.

By this method, the end-user is provided with the at least one image, when the message arrives at the communication device, i.e. at the client device.

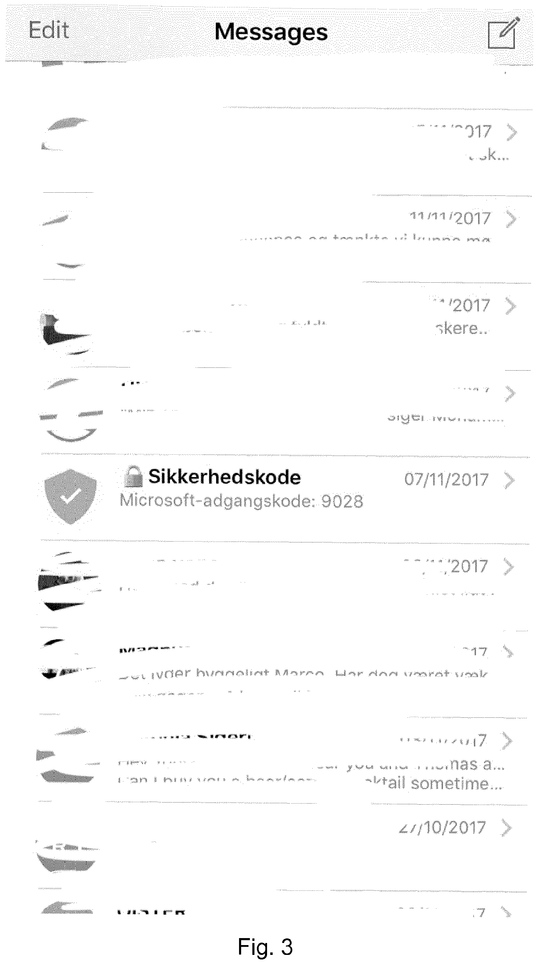

Thus, the coupling of the image to the at least one of the authentic message providers as an entry in the list of contacts, marks the at least one authentic message provider as authentic in the list of contacts. In the list of contacts the message provider, which may be a company, may be represented in the form of a name or an e-mail, and when coupled with the at least one image, for example have the image displayed next to the representation of the message provider. For example, in the entry of the list of contacts the at least one image may be displayed before or after the representation of the message provider, such that it is visual to the user of the communication device. The image may preferably be selected such that implies security to the authentic message provider, e.g. by choosing an image depicting a (locked) lock, a shield, thumbs up, or other symbols and/or images associated with security, or combinations thereof. An example is shown in Fig. 3.

The end-user may be able to clearly identify that all the entries in the list of contacts marked with that image, are authentic, and will provide an authentic message. In other words, the end-user is in principle able to get information of message providers before emails are even received by the end-user. The end-user is at any point in time able to request the list of authentic message providers from the remote server, for example by a touch of a button. Further, the step of requesting may be automated, for example such that the list is automatically received on a daily basis.

One of the advantages of the above disclosed method relates to receiving a message from a message provider. This is elaborated on in the following.

The present disclosure further relates to a computer implemented method for receiving an authentic message on a communication device, comprising the steps of:
providing at least one authentic identification entry in a list of contacts as lined out above, receiving a message on the communication device from at least one message provider after providing the at least one authentic identification entry, whereby if the at least one message provider of the received message is corresponding to at least one of the authentic message providers, then displaying the at least one authentic identification entry comprising the at least one image, thereby identifying the sender as authentic and representing the message as authentic. This applies in particular to email communication, i.e. authentication of an email.

Hence, when the user receives a new message from a message provider, which has been authenticated by creating an entry in the list of contacts where the representation of the message provider is combined with that image, and the user views this new message, e.g. in the communication application, such as a message client, the message will be displayed along with the entry from the list of contacts such that the image is visible for the user along with the representation of the message provider, such that the user associates this image with the message provider. And if the image provides an association of security, the user will associate the message provider with security and thereby trust the contents of the message, Hence, in this case it is the entry in the list of contacts that is marked - and not the message itself.

I.e. when the end-user receives a message, and sees this image in relation to the sender of the message, the end-user is able to clearly identify that the message provider has been authenticated. Accordingly, the end-user receiving the message is notified in a very illustrative way that the message provider is authentic. And the message provider is indeed authentic because it relies on the request of the list of authentic message providers.

Because the message is received after the at least one authentic identification entry is provided, the message provider, if authenticated beforehand, will appear to be authentic. Thus, the presently disclosed method for receiving a message authenticates the message providers already before a message is received, and therefore also optimizes the process of authenticating a message provider.

In some embodiments, the step of requesting the list of authentic message providers is via a gateway server, such as a text message gateway server and/or a SMS gateway server. The gateway server may be an integrated part of the remote server.

In preferred embodiments, the step of receiving the list of authentic message providers is via the gateway server, wherein the gateway server is transmitting a single session number for a single authentic message provider to the communication device, such that the single session number uniquely identifies a single authentic message provider. Gateway servers are typically used when sending and receiving SMS. The single session number may be in the form of an operator code, for example identifying a single phone number. In other words, the single session number may identify a single phone number, whereby the single phone number is authenticated.

In more preferred embodiments, the gateway server is further transmitting an inquiry to be accepted on the communication device, such that the single session number is only received on the communication device upon accepting the inquiry.

In most preferred embodiments, the step of providing at least one identification entry is by providing a single identification entry, wherein the single identification entry is in the form of the single session number.

Again, the single session number may be in the form of an operator code, for example identifying a single phone number. In other words, the single session number may identify a single phone number, whereby the single phone number appears on the list of contacts as an entry with the image.

By way of the above described embodiments, the gateway server may be responsible for providing the at least one identification entry to the communication device upon request.

The present disclosure further relates to a computer implemented method for receiving an authentic message on a communication device, comprising the steps of: providing a single authentic identification entry in a list of contacts according to one or more of the above described embodiments, receiving a message on the communication device from a single message provider after providing the single authentic identification entry, whereby if the single message provider of the received message is corresponding to the single authentic message provider, then displaying the single authentic identification entry comprising the at least one image, thereby identifying the sender as authentic and representing the message as authentic.

The present disclosure further relates to a computer implemented method for operating a gateway server, comprising the steps of: receiving a message from a single message provider to be forwarded to a communication device; verifying that the single authentic message provider is on a list of authentic message providers via a remote server; transmitting an inquiry to be accepted on the communication device, receiving an accepted inquiry from the communication device, transmitting the single authentic message provider in the form of a single session number; and forwarding the message from a message provider to the communication device, such that the communication device receives the single session number before the message, whereby the communication device is able to identify the sender as authentic and representing the message as authentic.

As described above, the single session number may uniquely identify a single phone number. The verification of the single authentic message provider may be dependent on receiving the message. In other words, authentication as provided by the verification may be dependent on receiving a message.

In common with the other aspects is that the message is received at the client side, i.e. on the user-device, after the at least one authentic identification entry is provided at the client side, i.e. on the user device. The advantage of this is that the end-user is able to clearly and visually ascertain see that the message provider is authentic.

Further, because the entry is provided on the client side, it is to be understood that a process of implementing the at least one entry in the device needs to take place on the client side, i.e. on the device.

The entries are marked on the device as authentic to the user without a process that relates to the message. In other words, the processes that take place on the communication device, i.e. marking the entries in the list of contacts as authentic, are independent on receiving a message. The marking of entries is automatic and to be determined by the client's setup of the list of contacts. When the user receives a authentic message the relevant contact has already been marked as authentic.

The step of receiving the list of authentic message providers from the remote server after said requesting clearly requires that the list of the authentic messages providers is provided at the server. Provision of such a list may be done in various ways, for example based on DMARC records. DMARC and other standards are described in the detailed description of the invention.

### Description of drawings

- **Fig. 1**: shows an overview of the method of authenticating a message provider.
- **Fig. 2**: shows details of method of a receiving an authentic message.
- **Fig. 3**: shows an example of two images coupled to a message provider.

### Detailed description of the invention

The at least one image may be in the form of a Unicode character. For example, a keylock emoji may be displayed using the Unicode U+1 F512. A Unicode like this may clearly mark that the message provider is safe and has been authenticated.

The at least one image may also be in the form of an image file. For example, an image showing a shield may be displayed together with the entry. A shield may also clearly mark that the message provider is safe and has been authenticated.

The at least one image may also be in the form of a first image in the form of a Unicode character and a second image in the form of an image file. By this combination of two types of images, falsification of marking entries as safe is secured.

The list of authentic message providers may be a list of session numbers. Each session number may uniquely define an operator code for telecommunication and/or text messages, for example linked to a phone number. The session number may be an application code, with which the communication device may be able to communicate.

Communication from the communication device to the remote server may be via an application-programming-interface (API), for example using the session numbers. For example, the communication device may run an application. The application may request the API to supply the latest version of the list of authentic message providers. The API may then deliver the latest version of the list of authentic message providers to the device.

The list of authentic message providers may be a list of email addresses, wherein the email addresses are at least verified to be secure by one or more of the following: DMARC, SPF and DKIM.

DMARC is an industry standard that aligns (or matches) an organization domain address with either the domain which passes Sender Policy Framework (SPF), or the domain in the "d= field" of the Domain Keys Identified Mail (DKIM) signature which passes the DKIM. A DMARC selector pass may allow a third party to sign a DKIM signature on behalf of a sender, and then a receiver using the domain in the "d= field" and the selector "s= field" in the DKIM signature to produce a DMARC pass. Even though the domains may not align per the DMARC specification, the verifier may have enough information to infer a relationship between the DKIM signature and the domain in the "From" address and therefore pass DMARC. A failure to align may not fail DMARC, however.

In relation to DMARC, further security may be added by checking whether the organisation behind the message provider is well-known, and/or checking whether the organisation behind the message has an acknowledged event history, and/or checking whether the organisation behind the message has had any recent cyber-attacks related to outgoing messages.

The step of requesting may be independent of receiving a message from a message provider.

In most embodiments, the list of contacts is stored on the device. However, in other embodiments, the list of contacts is stored on a database server in communication with the communication device. In relation hereto, the step of coupling at least one image to at least one of the authentic message providers may in some embodiments be performed on the database server.

In other embodiments, the step of coupling at least one image to at least one of the authentic message providers is performed on the remote server.

In alternative embodiments, the step of coupling at least one image to at least one of the authentic message providers is performed on the communication device.

The communication device may be a smartphone, a computer, a touch screen device, such as without a storing device located inside the device, but for example communicating with a database server.

The single identification entry in the form of the single session number may be deleted from the list of contacts after a predefined period of time.

The user of the communication device may in most embodiments be prompted that the single identification entry will be deleted since such a deletion may be restricted by the user.

### System and use

A communication device is present. The term "device" should be construed broadly not only as the physical device of the user but also including e.g. remote servers, clouds or web-based content management systems. It should be noted that it is the device of a user, the end-user.

The presently disclosed method may be implemented as a separate computer program but may also be implemented as a plugin to an existing service running on a device or online.

The present disclosure further relates to a system for performing the methods defined herein, the system comprising a non-transitive, computer-readable storage device for storing instructions that, when executed by a processor, performs said method(s).

The system may comprise a mobile device comprising a processor and a memory and being adapted to perform the method but it can also by a stationary system or a system operating from a centralized location, and/or a remote system, involving e.g. cloud computing. The present disclosure further relates to a computer program having instructions which when executed by a computing device or system cause the computing device or system to perform any of methods described herein. Computer program in this context shall be construed broadly and include e.g. programs to be run on a PC or software designed to run on smartphones, tablet computers or other mobile devices. Computer programs and mobile applications include software that is free and software that has to be bought, and also include software that is distributed over distribution software platforms such as Apple App Store, Google Play and Windows Phone Store.

### Example 1 - overview of method of authenticating a message provider

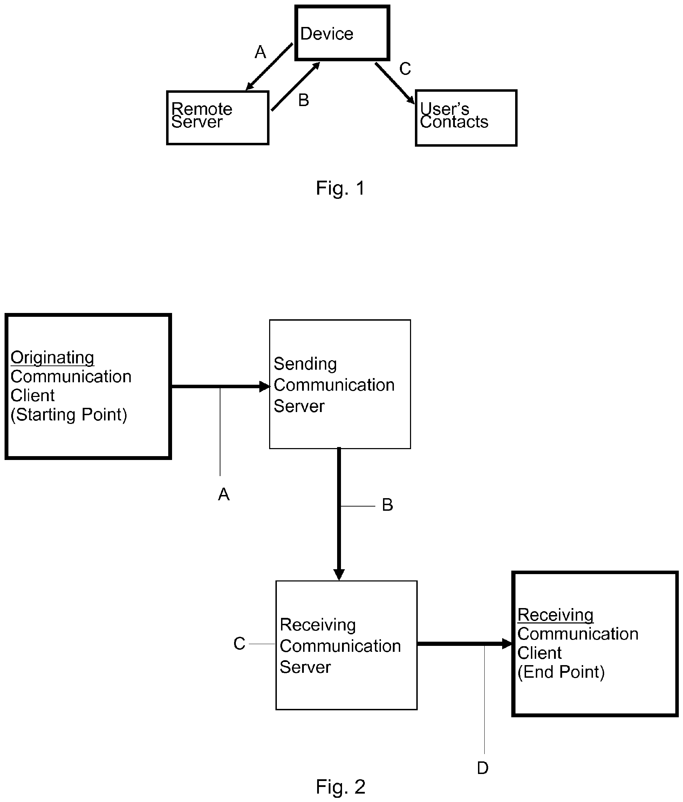

Fig. 1 shows an example of a method according to the present disclosure divided into three steps, indicated as steps A, B and C.

In step A, the device-application requests the remote server for the latest version of the "whitelist", i.e. the list of authentic message providers, containing information about authentic and secure communicators and/or the communication itself.

In step B, this information is then delivered by the remote server as contact-data, along with at least one image and/or Unicode character.

In step C, the contact-data comprising the at least one image and/or Unicode character is displayed on the device in accordance with the received communication by utility of the user's database of contacts (now containing the aforementioned contact-data).

### Example 2 - details of method of a receiving an authentic message

Fig. 2 shows an example of a method according to the present disclosure of how a message is able to be received, divided into four steps, indicated as steps A, B, C and D.

In step A, new communication is created, and delivered from communication client to sending communication server.

In step B, the communication is delivered from sending communication server to receiving communication server.

In step C, prior to delivery at the receiving communication client, the communication is processed by multiple and various analysis measures, and *might* or *might not* be subject to blocking and/or subject to predetermined markings pertaining to various logics of categorization that *may* or *may not* influence the final destination folder, and/or delivery itself.

In step D, the communication is delivered from receiving communication server to receiving communication client (end point).

### Example 3 - coupling of two images to a message provider

**Fig. 3** shows a screenshot from a message client on a smartphone (iPhone running iOS software). The screenshot shows an overview of messages received from different message providers as known from typical message clients on today's smartphones, however in this case only the message from the authentic message provider can be seen in total, the other messages are disguised in this example for privacy reasons. Such a message overview typically shows the sender and a heading or the first line(s) for each message. As seen in fig. 3 the sender is an authentic message provider which has been authenticated according to the herein disclosed method, because it is displayed, and thereby marked, with an image / symbol in the form of a locked lock (a Unicode character) in front of the name "Sikkerhedskode". Associated with this contact list entry is also a shield to the left with a check mark in the centre, i.e. at the place where an image of the person associated with a human contact list entry usually would be displayed. The message shown in fig. 3 is from an authentic message provider which is represented in the contact list entry by the word "Sikkerhedskode" which is Danish for "security code". The locked lock and the shield give the user the impression and the certainty that the message is authentic because the message provider has been authenticated.

## Claims

1. A computer implemented method for providing at least one authentic identification entry in a list of contacts of a communication application on a communication device, comprising the steps of:
- requesting a list of authentic message providers from a remote server communicating with the communication device;
- receiving the list of authentic message providers from the remote server after said requesting;
- storing the list of authentic message providers such that it is coupled to the list of contacts;
- coupling at least one image to at least one of the authentic message providers on the list of authentic message providers; and
- providing at least one identification entry in the list of contacts, wherein the at least one identification entry is corresponding to the at least one of the authentic message providers on the list of authentic message providers, such that the at least one identification entry comprises at least one image, whereby the at least one identification entry is marked as at least one authentic identification entry.

2. The method according to claim 1, wherein the at least one image is in the form of a Unicode character, or wherein the at least one image is in the form of an image file, or wherein the at least one image is a first image in the form of a Unicode character and a second image in the form of an image file.

3. The method according to any of the preceding claims, wherein the list of authentic message providers is a list of session number for operator codes for telecommunication and/or text messages, or wherein the list of authentic message providers is a list of email addresses, preferably the email addresses are at least verified to be secured by one or more of the following: DMARC, SPF and DKIM.

4. The method according to any of the preceding claims, wherein the step of requesting is independent of receiving a message from a message provider.

5. The method according to any of the preceding claims, wherein the step of requesting the list of authentic message providers is via a gateway server, such as a text message gateway server or a SMS gateway server, and/or wherein the gateway server is an integrated part of the remote server.

6. The method according to claim 5, wherein the step of receiving the list of authentic message providers is via the gateway server, wherein the gateway server is transmitting a single session number for a single authentic message provider to the communication device, such that the single session number uniquely identifies a single authentic message provider, and/or wherein the gateway server further is transmitting an inquiry to be accepted on the communication device, such that the single session number is only received on the communication device upon accepting the inquiry.

7. The method according to claim 6, wherein the step of providing at least one identification entry is by providing a single identification entry, wherein the single identification entry is in the form of the single session number and/or wherein the single identification entry in the form of the single session number is deleted from the list of contacts after a predefined period of time, and/or wherein the list of contacts is stored on the communication device or on a database server in communication with the communication device.

8. The method according to any of the preceding claims, wherein the step of coupling at least one image to at least one of the authentic message providers is performed on the remote server or on the database server or on the communication device.

9. The computer implemented method according to any one of the claims 1-8, comprising the steps of:
- receiving a message on the communication device from at least one message provider after providing the at least one authentic identification entry, whereby if the at least one message provider of the received message is corresponding to at least one of the authentic message providers, then displaying the at least one authentic identification entry comprising the at least one image, thereby identifying the sender as authentic and representing the message as authentic.

10. The computer implemented method according to claim 7, comprising the steps of:
- receiving a message on the communication device from a single message provider after providing the single authentic identification entry, whereby if the single message provider of the received message is corresponding to the single authentic message providers, then displaying the single authentic identification entry comprising the at least one image, thereby identifying the sender as authentic and representing the message as authentic,
wherein the step of receiving the message is via the gateway server transmitting the message.

11. A system for providing at least one authentic identification entry in a list of contacts, comprising a non-transitive, computer-readable storage device for storing instructions that, when executed by a processor, performs the method according to any of claims 1-10.

12. A mobile device comprising a processor and a memory and being configured for providing at least one authentic identification entry in a list of contacts of a communication application on said mobile device, the mobile device configured for performing comprising the steps of:
- requesting a list of authentic message providers from a remote server communicating with the mobile device;
- receiving the list of authentic message providers from the remote server after said requesting;
- storing the list of authentic message providers such that it is coupled to the list of contacts;
- coupling at least one image to at least one of the authentic message providers on the list of authentic message providers; and
- providing at least one identification entry in the list of contacts, wherein the at least one identification entry is corresponding to the at least one of the authentic message providers on the list of authentic message providers, such that the at least one identification entry comprises at least one image, whereby the at least one identification entry is marked as at least one authentic identification entry.

13. The mobile device of claim 12, further configured for performing the method any of claims 1-10.

14. A computer program having instructions which when executed by a computing device or system causes the computing device or system to provide at least one authentic identification entry in a list of contacts of a communication application on a computing device or system, comprising the steps of:
- requesting a list of authentic message providers from a remote server communicating with the computing device or systems;
- receiving the list of authentic message providers from the remote server after said requesting;
- storing the list of authentic message providers such that it is coupled to the list of contacts;
- coupling at least one image to at least one of the authentic message providers on the list of authentic message providers; and
- providing at least one identification entry in the list of contacts, wherein the at least one identification entry is corresponding to the at least one of the authentic message providers on the list of authentic message providers, such that the at least one identification entry comprises at least one image, whereby the at least one identification entry is marked as at least one authentic identification entry.

15. The computer program of claim 14, further configured for performing the method any of claims 1-10.

## Patentansprüche

1. Computerimplementiertes Verfahren zum Bereitstellen mindestens eines authentischen Identifizierungseintrags in einer Liste von Kontakten einer Kommunikationsanwendung auf einer Kommunikationsvorrichtung, umfassend die folgenden Schritte:
- Anfordern einer Liste authentischer Nachrichtenbereitsteller von einem Remote-Server, der mit der Kommunikationsvorrichtung kommuniziert;
- Empfangen der Liste authentischer Nachrichtenbereitsteller von dem Remote-Server nach dem Anfordern;
- Speichern der Liste authentischer Nachrichtenbereitsteller, sodass sie an die Liste der Kontakte gekoppelt ist;
- Koppeln mindestens eines Bildes an mindestens einen der authentischen Nachrichtenbereitsteller auf der Liste authentischer Nachrichtenbereitsteller; und
- Bereitstellen von mindestens einem Identifizierungseintrag in der Kontaktliste, wobei der mindestens eine Identifizierungseintrag dem mindestens einen der authentischen Nachrichtenbereitsteller auf der Liste authentischer Nachrichtenbereitsteller entspricht, sodass der mindestens eine Identifizierungseintrag mindestens ein Bild umfasst, wobei der mindestens eine Identifizierungseintrag als mindestens ein authentischer Identifizierungseintrag gekennzeichnet ist.

2. Verfahren nach Anspruch 1, wobei das mindestens eine Bild in Form eines Unicode-Zeichens vorliegt oder wobei das mindestens eine Bild in Form einer Bilddatei vorliegt oder wobei das mindestens eine Bild ein erstes Bild in Form eines Unicode-Zeichens und ein zweites Bild in Form einer Bilddatei ist.

3. Verfahren nach einem der vorhergehenden Ansprüche, wobei die Liste authentischer Nachrichtenbereitsteller eine Liste von Sitzungsnummern für Betreibercodes für Telekommunikation und/oder Textnachrichten ist, oder wobei die Liste authentischer Nachrichtenbereitsteller eine Liste von E-Mail-Adressen ist, wobei die E-Mail-Adressen vorzugsweise mindestens durch eines oder mehrere der Folgenden nachweislich gesichert sind: DMARC, SPF und DKIM.

4. Verfahren nach einem der vorhergehenden Ansprüche, wobei der Schritt zum Anfordern unabhängig vom Empfangen einer Nachricht von einem Nachrichtenbereitsteller ist.

5. Verfahren nach einem der vorhergehenden Ansprüche, wobei der Schritt zum Anfordern der Liste authentischer Nachrichtenbereitsteller über einen Gateway-Server erfolgt, wie etwa einen Textnachrichten Gateway-Server oder einen SMS-Gateway-Server, und/oder wobei der Gateway-Server ein integrierter Teil des Remote-Servers ist.

6. Verfahren nach Anspruch 5, wobei der Schritt zum Empfangen der Liste authentischer Nachrichtenbereitsteller über den Gateway-Server erfolgt, wobei der Gateway-Server eine einzelne Sitzungsnummer für einen einzelnen authentischen Nachrichtenbereitsteller an die Kommunikationsvorrichtung überträgt, sodass die einzelne Sitzungsnummer einen einzelnen authentischen Nachrichtenbereitsteller eindeutig identifiziert, und/oder wobei der Gateway-Server ferner eine Anfrage sendet, die auf der Kommunikationsvorrichtung angenommen werden soll, sodass die einzelne Sitzungsnummer nur auf der Kommunikationsvorrichtung empfangen wird, wenn die Anfrage angenommen wird.

7. Verfahren nach Anspruch 6, wobei der Schritt zum Bereitstellen mindestens eines Identifizierungseintrags darin besteht, einen einzelnen Identifizierungseintrag bereitzustellen, wobei der einzelne Identifizierungseintrag in Form der einzelnen Sitzungsnummer vorliegt und/oder wobei der einzelne Identifizierungseintrag in Form der einzelnen Sitzungsnummer nach einer vordefinierten Zeitspanne aus der Kontaktliste gelöscht wird und/oder wobei die Kontaktliste auf der Kommunikationsvorrichtung oder auf einem Datenbankserver in Kommunikation mit dem Kommunikationsvorrichtung gespeichert wird.

8. Verfahren nach einem der vorhergehenden Ansprüche, wobei der Schritt zum Koppeln mindestens eines Bildes an mindestens einen der authentischen Nachrichtenbereitsteller auf dem Remote-Server oder auf dem Datenbankserver oder auf der Kommunikationsvorrichtung durchgeführt wird.

9. Computerimplementiertes Verfahren nach einem der Ansprüche 1-8, umfassend die folgenden Schritte:
- Empfangen einer Nachricht auf der Kommunikationsvorrichtung von mindestens einem Nachrichtenbereitsteller nach Bereitstellen des mindestens einen authentischen Identifizierungseintrags, wobei, wenn der mindestens eine Nachrichtenbereitsteller der empfangenen Nachricht mindestens einem der authentischen Nachrichtenbereitsteller entspricht, der mindestens eine authentische Identifizierungseintrag mit dem mindestens einen Bild angezeigt wird, wodurch der Absender als authentisch identifiziert und die Nachricht als authentisch dargestellt wird.

10. Computerimplementiertes Verfahren nach Anspruch 7, umfassend die folgenden Schritte:
- Empfangen einer Nachricht auf der Kommunikationsvorrichtung von einem einzelnen Nachrichtenbereitsteller nach Bereitstellen des einzelnen authentischen Identifizierungseintrags, wobei, wenn der einzelne Nachrichtenbereitsteller der empfangenen Nachricht dem einzelnen authentischen Nachrichtenbereitsteller entspricht, der einzelne authentische Identifizierungseintrag mit dem mindestens einen Bild angezeigt wird, wodurch der Absender als authentisch identifiziert und die Nachricht als authentisch dargestellt wird,
wobei der Schritt zum Empfangen der Nachricht über den Gateway-Server erfolgt, der die Nachricht überträgt.

11. System zum Bereitstellen mindestens eines authentischen Identifizierungseintrags in einer Kontaktliste, umfassend eine nicht transitive, computerlesbare Speichervorrichtung zum Speichern von Anweisungen, die bei Ausführung durch einen Prozessor das Verfahren nach einem der Ansprüche 1-10 ausführt.

12. Mobile Vorrichtung, die einen Prozessor und einen Speicher umfasst und dazu konfiguriert ist, mindestens einen authentischen Identifizierungseintrag in einer Liste von Kontakten einer Kommunikationsanwendung auf der mobilen Vorrichtung bereitzustellen, wobei die mobile Vorrichtung zum Durchführen der folgenden Schritte konfiguriert ist:
- Anfordern einer Liste authentischer Nachrichtenbereitsteller von einem Remote-Server, der mit der mobilen Vorrichtung kommuniziert;
- Empfangen der Liste authentischer Nachrichtenbereitsteller von dem Remote-Server nach dem Anfordern;
- Speichern der Liste authentischer Nachrichtenbereitsteller, sodass sie an die Liste der Kontakte gekoppelt ist;
- Koppeln mindestens eines Bildes an mindestens einen der authentischen Nachrichtenbereitsteller auf der Liste authentischer Nachrichtenbereitsteller; und
- Bereitstellen von mindestens einem Identifizierungseintrag in der Kontaktliste, wobei der mindestens eine Identifizierungseintrag dem mindestens einen der authentischen Nachrichtenbereitsteller auf der Liste authentischer Nachrichtenbereitsteller entspricht, sodass der mindestens eine Identifizierungseintrag mindestens ein Bild umfasst, wobei der mindestens eine Identifizierungseintrag als mindestens ein authentischer Identifizierungseintrag gekennzeichnet ist.

13. Mobile Vorrichtung nach Anspruch 12, die ferner zum Durchführen des Verfahrens nach einem der Ansprüche 1-10 konfiguriert ist.

14. Computerprogramm mit Anweisungen, die bei Ausführung durch eine Rechenvorrichtung oder ein Rechensystem die Rechenvorrichtung oder das Rechensystem dazu veranlassen, mindestens einen authentischen Identifizierungseintrag in einer Liste von Kontakten einer Kommunikationsanwendung auf einer Rechenvorrichtung oder einem Rechensystem bereitzustellen, umfassend die folgenden Schritte:
- Anfordern einer Liste authentischer Nachrichtenbereitsteller von einem Remote-Server, der mit der Rechenvorrichtung oder dem Rechensystem kommuniziert;
- Empfangen der Liste authentischer Nachrichtenbereitsteller von dem Remote-Server nach dem Anfordern;
- Speichern der Liste authentischer Nachrichtenbereitsteller, sodass sie an die Liste der Kontakte gekoppelt ist;
- Koppeln mindestens eines Bildes an mindestens einen der authentischen Nachrichtenbereitsteller auf der Liste authentischer Nachrichtenbereitsteller; und
- Bereitstellen von mindestens einem Identifizierungseintrag in der Kontaktliste, wobei der mindestens eine Identifizierungseintrag dem mindestens einen der authentischen Nachrichtenbereitsteller auf der Liste authentischer Nachrichtenbereitsteller entspricht, sodass der mindestens eine Identifizierungseintrag mindestens ein Bild umfasst, wobei der mindestens eine Identifizierungseintrag als mindestens ein authentischer Identifizierungseintrag gekennzeichnet ist.

15. Computerprogramm nach Anspruch 14, das ferner zum Durchführen des Verfahrens nach einem der Ansprüche 1-10 konfiguriert ist.

## Revendications

1. Procédé mis en œuvre par ordinateur pour fournir au moins une entrée d'authentification dans une liste de contacts d'une application de communication sur un dispositif de communication, comprenant les étapes consistant à :
- demander une liste de fournisseurs de messages authentiques à un serveur distant communiquant avec le dispositif de communication ;
- recevoir la liste des fournisseurs de messages authentiques du serveur distant après ladite requête ;
- stocker la liste des fournisseurs de messages authentiques de sorte qu'elle soit couplée à la liste de contacts ;
- coupler au moins une image à au moins un des fournisseurs de messages authentiques sur la liste des fournisseurs de messages authentiques ; et
- fournir au moins une entrée d'identification dans la liste de contacts, dans lequel l'au moins une entrée d'identification correspond à l'au moins un des fournisseurs de messages authentiques sur la liste des fournisseurs de messages authentiques, de sorte que l'au moins une entrée d'identification comprend au moins une image, moyennant quoi l'au moins une entrée d'identification est marquée comme au moins une entrée d'authentification.

2. Procédé selon la revendication 1, dans lequel l'au moins une image est sous la forme d'un caractère Unicode, ou dans lequel l'au moins une image est sous la forme d'un fichier image, ou dans lequel la au moins une image est une première image sous la forme d'un caractère Unicode et une seconde image sous la forme d'un fichier image.

3. Procédé selon l'une quelconque des revendications précédentes, dans lequel la liste des fournisseurs de messages authentiques est une liste de numéros de session pour les codes d'opérateur pour les télécommunications et/ou les messages texte, ou dans lequel la liste des fournisseurs de messages authentiques est une liste d'adresses e-mail, de préférence, les adresses e-mail sont au moins vérifiées pour être sécurisées par un ou plusieurs des éléments suivants : DMARC, SPF et DKIM.

4. Procédé selon l'une quelconque des revendications précédentes, dans lequel l'étape de demande est indépendante de la réception d'un message d'un fournisseur de messages.

5. Procédé selon l'une quelconque des revendications précédentes, dans lequel l'étape de demande de la liste des fournisseurs de messages authentiques se fait via un serveur passerelle, tel qu'un serveur passerelle de messagerie texte ou un serveur passerelle SMS, et/ou dans lequel le serveur passerelle est une partie intégrée du serveur distant.

6. Procédé selon la revendication 5, dans lequel l'étape de réception de la liste des fournisseurs de messages authentiques se fait via le serveur passerelle, dans lequel le serveur passerelle transmet un numéro de session unique pour un fournisseur de messages authentiques unique au dispositif de communication, de sorte que le seul numéro de session identifie de manière unique un seul fournisseur de messages authentiques, et/ou dans lequel le serveur passerelle transmet en outre une demande à accepter sur le dispositif de communication, de sorte que le numéro de session unique n'est reçu sur le dispositif de communication qu'après acceptation de la demande.

7. Procédé selon la revendication 6, dans lequel l'étape de fourniture d'au moins une entrée d'identification consiste à fournir une entrée d'identification unique, dans lequel l'entrée d'identification unique se présente sous la forme du numéro de session unique et/ou dans lequel l'entrée d'identification unique sous la forme du numéro de session unique est supprimée de la liste de contacts après une période de temps prédéfinie, et/ou dans lequel la liste de contacts est stockée sur le dispositif de communication ou sur un serveur de base de données en communication avec le dispositif de communication.

8. Procédé selon l'une quelconque des revendications précédentes, dans lequel l'étape de couplage d'au moins une image à au moins un des fournisseurs de messages authentiques est réalisée sur le serveur distant ou sur le serveur de base de données ou sur le dispositif de communication.

9. Procédé mis en œuvre par ordinateur selon l'une quelconque des revendications 1 à 8, comprenant les étapes consistant à :
- recevoir un message sur le dispositif de communication d'au moins un fournisseur de messages après avoir fourni l'au moins une entrée d'authentification, moyennant quoi si l'au moins un fournisseur de messages du message reçu correspond à au moins un des fournisseurs de messages authentiques, alors à afficher l'au moins une entrée d'authentification comprenant l'au moins une image, identifiant ainsi l'expéditeur comme authentique et représentant le message comme authentique.

10. Procédé mis en œuvre par ordinateur selon la revendication 7, comprenant les étapes consistant à :
- recevoir un message sur le dispositif de communication d'un unique fournisseur de messages après avoir fourni l'entrée d'authentification unique, moyennant quoi si l'unique fournisseur de messages du message reçu correspond aux fournisseurs de messages authentiques uniques, alors à afficher l'entrée d'authentification unique comprenant l'au moins une image, identifiant ainsi l'expéditeur comme authentique et représentant le message comme authentique,
dans lequel l'étape de réception du message se fait via le serveur passerelle transmettant le message.

11. Système pour fournir au moins une entrée d'authentification dans une liste de contacts, comprenant un dispositif de stockage non transitif lisible par ordinateur pour stocker des instructions qui, lorsqu'elles sont exécutées par un processeur, exécutent le procédé selon l'une quelconque des revendications 1 à 10.

12. Dispositif mobile comprenant un processeur et une mémoire et étant configuré pour fournir au moins une entrée d'authentification dans une liste de contacts d'une application de communication sur ledit dispositif mobile, le dispositif mobile configuré pour l'exécution comprenant les étapes consistant à :
- demander une liste de fournisseurs de messages authentiques à un serveur distant communiquant avec le dispositif mobile;
- recevoir la liste des fournisseurs de messages authentiques du serveur distant après ladite requête ;
- stocker la liste des fournisseurs de messages authentiques de sorte qu'elle soit couplée à la liste de contacts ;
- coupler au moins une image à au moins l'un des fournisseurs de messages authentiques sur la liste des fournisseurs de messages authentiques ; et
- fournir au moins une entrée d'identification dans la liste de contacts, dans lequel l'au moins une entrée d'identification correspond à l'au moins un des fournisseurs de messages authentiques sur la liste des fournisseurs de messages authentiques, de sorte que l'au moins une entrée d'identification comprend au moins une image, moyennant quoi l'au moins une entrée d'identification est marquée comme au moins une entrée d'authentification.

13. Dispositif mobile selon la revendication 12, configuré en outre pour exécuter le procédé selon l'une quelconque des revendications 1 à 10.

14. Programme informatique ayant des instructions qui, lorsqu'elles sont exécutées par un dispositif ou système informatique, amènent le dispositif ou système informatique à fournir au moins une entrée d'authentification dans une liste de contacts d'une application de communication sur un dispositif ou système informatique, comprenant les étapes consistant à :
- demander une liste de fournisseurs de messages authentiques à un serveur distant communiquant avec le dispositif ou les systèmes informatiques ;
- recevoir la liste des fournisseurs de messages authentiques du serveur distant après ladite requête ;
- stocker la liste des fournisseurs de messages authentiques de sorte qu'elle soit couplée à la liste de contacts ;
- coupler au moins une image à au moins un des fournisseurs de messages authentiques sur la liste des fournisseurs de messages authentiques ; et
- fournir au moins une entrée d'identification dans la liste de contacts, dans lequel l'au moins une entrée d'identification correspond à l'au moins un des fournisseurs de messages authentiques sur la liste des fournisseurs de messages authentiques, de sorte que l'au moins une entrée d'identification comprend au moins une image, moyennant quoi l'au moins une entrée d'identification est marquée comme au moins une entrée d'authentification.

15. Programme informatique selon la revendication 14, configuré en outre pour exécuter le procédé selon l'une quelconque des revendications 1 à 10.
